# FASCICULE DE BREVET EUROPEEN

(11) **EP 0 782 679 B1**
(45) Date de publication et mention de la délivrance du brevet: **10.05.2000**
(21) Numéro de dépôt: 96925815.1
(22) Date de dépôt: 18.07.1996
(51) Int. Cl.: F16L 55/162, F16L 55/168, F28F 11/02

(54) **DISPOSITIF DESTINE A ETRE FIXE DE FACON ETANCHE SUR AU MOINS UN ELEMENT CYLINDRIQUE**
VORRICHTUNG ZUM DICHTEN VERBINDEN MIT MINDESTENS EINEM ZYLINDRISCHEN ELEMENT
DEVICE SEALABLY CONNECTABLE TO AT LEAST ONE CYLINDRICAL ELEMENT

(30) Priorité: 19.07.1995 FR 9508731
(43) Date de publication de la demande: 09.07.1997
(73) Titulaire: ALSTOM Energy Systems S.A., 78140 Velizy-Villacoublay (FR); Centrale Nucleaire Europeenne a Neutrons Rapides S.A., 75008 Paris (FR); ELECTRICITE DE FRANCE, 75008 Paris (FR)
(72) Inventeur: BONMARTIN, Michel, F-92140 Clamart (FR); VEYRAT, Bruno, F-38510 Vezeronce-Curtin (FR); WOLFF, Yann, F-38510 Morestel (FR); BONNAND, Christian, F-59830 Bachy (FR)
(74) Mandataire: Gosse, Michel
(86) Numéro de dépôt international: FR9601128
(87) Numéro de publication internationale: WO9704268

(56) Documents cités:
- EP-A- 0 047 407
- EP-A- 0 161 078
- EP-A- 0 181 250
- EP-A- 0 271 739
- EP-A- 0 626 232

## Description

La présente invention se rapporte à un dispositif destiné à être fixé de façon étanche sur au moins un élément cylindrique.

Ce dispositif est de préférence destiné à l'intervention sur un tube d'alimentation en Argon d'un échangeur de réacteur nucléaire, disposé à plusieurs mètres d'une dalle et donc inaccessible.

Il a déjà été proposé des procédés de réparation d'un tube d'échangeur de réacteur nucléaire, au voisinage de la plaque tubulaire de l'échangeur. Dans les documents de brevet antérieurs EP-0 271 739 et EP-0 181 250, un manchon est introduit dans le tube à réparer et y est dudgeonné puis soudé.

De tels procédés nécessitent un accès possible à la zone d'intervention.

Du document de brevet européen EP 161 078, on connaît un dispositif pouvant aisément être mis en place à distance, par guidage sur l'élément cylindrique à traiter puis par expansion grâce à un fluide sous pression.

Ce dispositif comporte
- un premier manchon,
- un second manchon coaxial au premier manchon, de capacité à se déformer supérieure à celle du premier manchon et solidarisé de façon étanche par ses deux extrémités au premier manchon,
- au moins deux bagues cylindriques coaxiales au second manchon, appliquées sur celui-ci,
- au moins un moyen d'injection d'un fluide sous pression entre le premier et le second manchon.

L'invention a pour but de perfectionner un tel dispositif et propose que chaque bague est solidarisée par un de ses bords à une extrémité du second manchon et que son autre bord est libre de façon à permettre la déformation de la bague par expansion du second manchon, de façon à réaliser une étanchéité sur l'élément cylindrique.

De préférence, il comporte au moins une troisième bague appliquée sur le second manchon et intercalée entre les deux bagues précédentes.

Selon le mode de réalisation préféré, les bagues ont des bords libres biseautés sur leur face adjacente au second manchon.

Avantageusement, les manchons et les bagues sont métalliques.

Dans ce cas, les solidarisations sont des soudures et, de préférence, les manchons et les bagues sont en acier inoxydable.

Les moyens d'injection sont des tubulures débouchant entre le premier et le second manchon et reliées à une alimentation en fluide sous pression.

Le fluide sous pression peut être de l'eau à une pression pilotée comprise entre 1200 et 1600 bar.

Selon une première variante, le dispositif destiné à être fixé à l'intérieur d'au moins un tube et
- le premier manchon a un diamètre externe inférieur au diamètre interne du tube,
- le second manchon a un diamètre interne sensiblement égal au diamètre externe du premier manchon,
- les bagues ont un diamètre interne sensiblement égal au diamètre externe du second manchon.

Selon une seconde variante, le dispositif est destiné à être fixé à l'extérieur d'au moins un élément cylindrique et
- le premier manchon a un diamètre interne supérieur au diamètre externe de l'élément cylindrique ,
- le second manchon a un diamètre externe sensiblement égal au diamètre interne du premier manchon,
- les bagues ont un diamètre externe sensiblement égal au diamètre interne du second manchon.

Le dispositif peut servir de raccord de deux tubes aboutés, de dispositif de réparation d'une zone endommagée d'un tube ou de dispositif d'obturation d'un tube.

Dans ce dernier cas, le premier manchon comporte une paroi de fermeture de son espace interne.

L'invention est décrite ci-après plus en détail à l'aide de figures ne représentant qu'un mode de réalisation préféré de l'invention.

La figure 1 est une vue en coupe partielle d'une application particulière du dispositif conforme à l'invention.

La figure 2 est une vue en coupe longitudinale d'une première variante de réalisation du dispositif conforme à l'invention, avant expansion.

La figure 3 est une vue en coupe longitudinale d'une première variante de réalisation du dispositif conforme à l'invention, après expansion.

La figure 4 est une vue en coupe longitudinale d'une seconde variante de réalisation du dispositif conforme à l'invention, avant et après expansion.

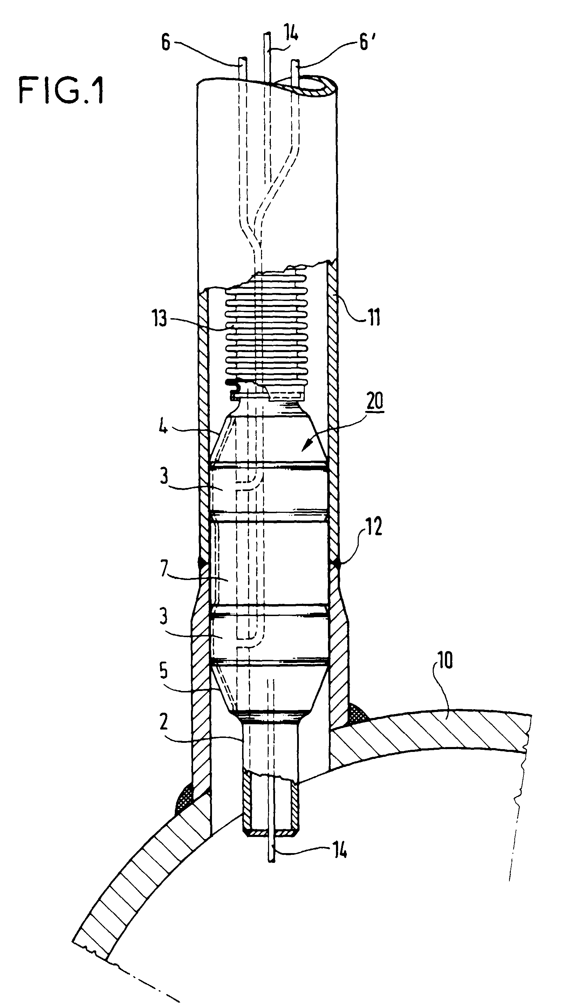

Sur la figure 1 est représenté un tube 10 d'échangeur de réacteur nucléaire équipé d'un tube 11 d'alimentation en Argon. Dans la zone 12 de ce tube 11 est détectée un endommagement entraînant une fuite. Cette zone 12 est inaccessible car disposée à plusieurs mètres de la dalle. Le dispositif conforme à l'invention 20 est glissé à l'intérieur du tube 11 grâce à un tube ondulé 13 le poussant et équipé d'un agencement de détection, par exemple d'une fibre optique 14 reliée à un fibroscope ou d'une caméra, permettant de repérer le défaut de la zone 12 et de positionner le dispositif 20 sur cette zone 12.

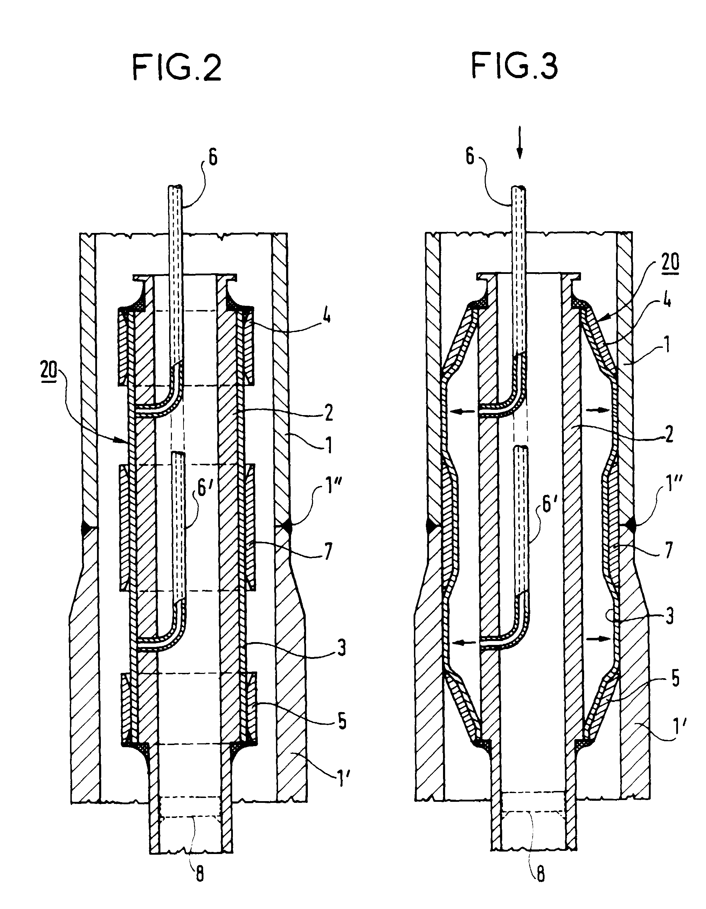

Les figures 2 et 3 décrivent de façon plus générale le dispositif 20 conforme à l'invention. Il est ici destiné à relier deux tubes aboutés 1, 1' ou à réparer une zone défectueuse 1", par exemple une soudure, entre ces deux tubes 1, 1'.

Il comporte, à l'état initial, avant expansion,
- un premier manchon 2,
- un second manchon 3 coaxial au premier manchon 2, de capacité à se déformer supérieure à celle du premier manchon 2, selon l'exemple représenté d'épaisseur inférieure à celle du premier manchon 2, et solidarisé de façon étanche par ses deux extrémités au premier manchon 2,
- deux bagues cylindriques 4, 5, de préférence identiques, coaxiales au second manchon, appliquées sur celui-ci et dont chacune est solidarisée par un de ses bords à une extrémité du second manchon 3,
- une troisième bague 7 appliquée sur le second manchon 3 et intercalée entre les deux bagues précédentes 4, 5.

Eventuellement, plusieurs bagues telles que cette bague 7 peuvent être réparties sur la longueur du second manchon 3.

Le premier manchon 2, le second manchon 3 et les bagues 4, 5, 7 sont enfilés les uns sur les autres, c'est-à-dire que, selon cette variante de réalisation,
- le premier manchon 2 a un diamètre externe inférieur au diamètre interne des tubes 1, 1',
- le second manchon 3 a un diamètre interne sensiblement égal au diamètre externe du premier manchon 2,
- les bagues 4, 5, 7 ont un diamètre interne sensiblement égal au diamètre externe du second manchon 3.

Les bagues 4, 5, 7 ont des bords libres biseautés sur leur face adjacente au second manchon 3.

Des tubulures 6, 6' formant moyens d'injection d'un fluide sous pression débouchent entre le premier 2 et le second 3 manchon et sont reliées à une alimentation en fluide sous pression.

Selon l'application particulière décrite ci-dessus, les manchons 2, 3 et les bagues 4, 5, 7 sont métalliques, de préférence en acier inoxydable et les solidarisations sont réalisées par des soudures. Le fluide sous pression est de l'eau à une pression pilotée comprise entre 1200 et 1600 bar.

Le pilotage de cette pression est réalisé par surveillance de la courbe de variation de la pression en fonction du temps, dont sont déduites les étapes de placage sur les tubes 1, 1', de déformation élastique et de déformation plastique du matériau du dispositif. Ainsi est assurée la fixation optimale sur les tubes, fixation suffisante pour réaliser une étanchéité fiable, tout en restant dans les limites de résistance mécanique du dispositif.

Par injection du fluide sous pression, le second manchon se déforme comme représenté sur la figure 3 et vient s'appliquer contre la paroi interne des tubes 1, 1'. Les bagues 4, 5, 7 ont leur bords libres biseautés qui viennent s'encastrer dans la paroi des tubes et réalisent ainsi l'étanchéité et la tenue mécanique de la fixation du dispositif 20 sur les tubes 1, 1'.

Avantageusement, le dispositif 20 est préexpansé avant sa mise en place dans un outillage de contention tubulaire de diamètre inférieur au diamètre interne des tubes 1, 1' assurant le blocage en position de la bague centrale 7. Il est également soumis à un traitement thermique favorisant ses aptitudes à la déformation. Les bagues 4, 5, 7 peuvent subir un traitement de surface, par exemple un revêtement de nickel pur, améliorant leur capacité de déformation et de calfatage, le revêtement épousant tout interstice entre les bagues et tout relief sur la paroi des tubes 1, 1'. Le second manchon 3 peut également être revêtu entre les bagues d'un revêtement élastique, en élastomère, polyuréthane ou tétrafluoréthylène par exemple, améliorant le contact avec les tubes 1, 1'.

La pression du fluide peut être supprimée ou conservée après mise en place par expansion du dispositif, selon l'application.

En équipant le premier manchon 2 d'une paroi de fermeture 8 de son espace interne, le dispositif peut être utilisé comme dispositif d'obturation d'un tube 1, 1'.

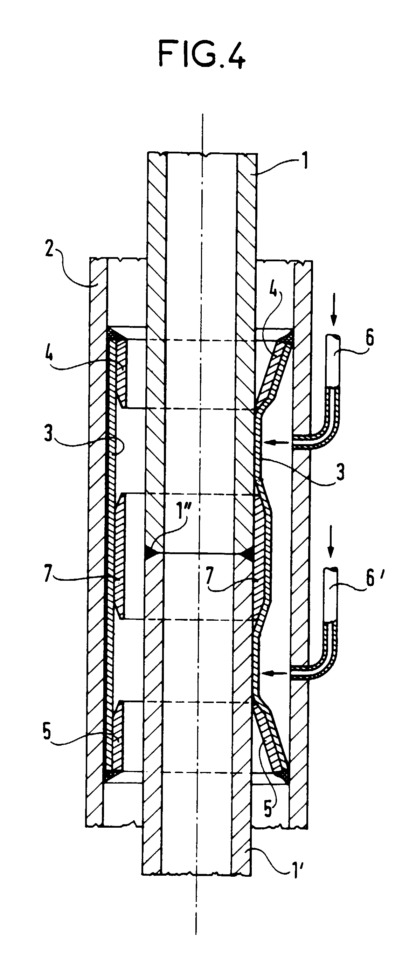

Le dispositif conforme à l'invention peut également être utilisé en tant que raccord ou dispositif de réparation de tubes, disposé à l'extérieur de ces tubes comme représenté sur la figure 4.

Dans ce cas,
- le premier manchon 2 a un diamètre interne supérieur au diamètre externe de l'élément cylindrique 8, 8',
- le second manchon 3 a un diamètre externe sensiblement égal au diamètre interne du premier manchon 2,
- les bagues 4, 5, 7 ont un diamètre externe sensiblement égal au diamètre interne du second manchon 3.

L'alimentation en fluide sous pression est alors réalisée à l'extérieur des tubes 1, 1' par les tubulures 6, 6'.

Il est représenté à l'état initial sur la partie gauche de la figure 4 et à l'état expansé sur la partie droite de la figure 4.

Toutes les autres caractéristiques techniques du dispsoitif, ainsi que la mise en oeuvre de celui-ci sont identiques à celles de la variante précédente.

Selon le mode de réalisation préféré, les différents éléments du dispositif sont métalliques, de préférence en acier inoxydable. Cependant, pour des applications présentant des contraintes de sécurité moins importantes ou dans le cas de tubes non métalliques, il peut être envisagé de réaliser le dispositif dans d'autres matériaux, par exemeple en matière plastique.

## Revendications

1. Dispositif destiné à être fixé de façon étanche sur au moins un élément cylindrique (1, 1'), comprenant
- un premier manchon (2),
- un second manchon (3) coaxial au premier manchon (2), de capacité à se déformer supérieure à celle du premier manchon (2) et solidarisé de façon étanche par ses deux extrémités au premier manchon (2),
- deux bagues cylindriques (4, 5) coaxiales au second manchon (3), appliquées sur celui-ci,
- au moins un moyen d'injection (6, 6') d'un fluide sous pression entre le premier (2) et le second (3) manchon,
caractérisé en ce que chaque bague est solidarisée par un de ses bords à une extrémité du second manchon (3) et que son autre bord est libre de façon à permettre la déformation de la bague par expansion du second manchon, de façon à réaliser une étanchéité sur l'élément cylindrique.

2. Dispositif selon la revendication 1, caractérisé en ce qu'il comporte au moins une troisième bague (7) appliquée sur le second manchon (3) et intercalée entre les deux bagues précédentes (4, 5).

3. Dispositif selon l'une des revendications précédentes, caractérisé en ce que les bagues (4, 5, 7) ont des bords libres biseautés sur leur face adjacente au second manchon (3).

4. Dispositif selon l'une des revendications précédentes, caractérisé en ce que les manchons (2, 3) et les bagues (4, 5, 7) sont métalliques.

5. Dispositif selon la revendication 4, caractérisé en ce que les solidarisations sont des soudures.

6. Dispositif selon la revendication 4 ou 5, caractérisé en ce que les manchons (2, 3) et les bagues (4, 5, 7) sont en acier inoxydable.

7. Dispositif selon l'une des revendications précédentes, caractérisé en ce que les moyens d'injection sont des tubulures (6, 6') débouchant entre le premier (2) et le second (3) manchon et reliées à une alimentation en fluide sous pression.

8. Dispositif selon l'une des revendications précédentes, caractérisé en ce que le fluide sous pression est de l'eau à une pression pilotée comprise entre 1200 et 1600 bar.

9. Dispositif selon l'une des revendications précédentes, destiné à être fixé sur au moins un tube (1, 1'), caractérisé en ce que
- le premier manchon (2) a un diamètre externe inférieur au diamètre interne du tube (1, 1'),
- le second manchon (3) a un diamètre interne sensiblement égal au diamètre externe du premier manchon (2),
- les bagues (4, 5, 7) ont un diamètre interne sensiblement égal au diamètre externe du second manchon (3).

10. Dispositif selon l'une des revendications 1 à 8, destiné à être fixé sur au moins un élément cylindrique (8, 8'), caractérisé en ce que
- le premier manchon (2) a un diamètre interne supérieur au diamètre externe de l'élément cylindrique (8, 8'),
- le second manchon (3) a un diamètre externe sensiblement égal au diamètre interne du premier manchon (2),
- les bagues (4, 5, 7) ont un diamètre externe sensiblement égal au diamètre interne du second manchon (3).

11. Raccord de deux tubes (1, 1', 8, 8') aboutés constitué d'un dispositif selon l'une des revendications précédentes.

12. Dispositif de réparation d'une zone endommagée d'un tube (1, 1', 8, 8') constitué d'un dispositif selon l'une des revendications 1 à 10.

13. Dispositif d'obturation d'un tube (1, 1') constitué d'un dispositif selon l'une des revendications 1 à 9 dont le premier manchon (2) comporte une paroi de fermeture (8) de son espace interne.

## Patentansprüche

1. Vorrichtung zur dichten Befestigung an wenigstens einem zylindrischen Element (1, 1'), mit
- einer ersten Hülse (2)
- einer zu der ersten Hülse (2) koaxialen zweiten Hülse (3) mit einer größeren Verformbarkeit als der der ersten Hülse (2), die an ihren beiden Enden dicht mit der ersten Hülse (2) verbunden ist,
- zwei zu der zweiten Hülse (3) koaxialen und an dieser angebrachten zylindrischen Ringen (4, 5),
- wenigstens einem Mittel (6, 6') zum Einspritzen eines Druckfluids zwischen die erste (2) und die zweite Hülse (3) ,
dadurch gekennzeichnet, dass jeder Ring an einem seiner Ränder mit einem Ende der zweiten Hülse (3) fest verbunden ist, und dass sein anderer Rand frei ist, um die Verformung des Rings durch Aufweitung der zweiten Hülse zu erlauben, um so eine Abdichtung am zylindrischen Element zu erzielen.

2. Vorrichtung nach Anspruch 1, dadurch gekennzeichnet, dass sie wenigstens einen an der zweiten Hülse (3) angebrachten und zwischen den zwei vorgenannten Ringen (4, 5) eingefügten dritten Ring (7) umfasst.

3. Vorrichtung nach einem der vorhergehenden Ansprüche, dadurch gekennzeichnet, dass die Ringe (4, 5, 7) gefaste freie Ränder an ihrer an die zweite Hülse (3) angrenzenden Seite haben.

4. Vorrichtung nach einem der vorhergehenden Ansprüche, dadurch gekennzeichnet, dass die Hülsen (2, 3) und die Ringe (4, 5, 7) aus Metall sind.

5. Vorrichtung nach Anspruch 4, dadurch gekennzeichnet, dass die festen Verbindungen Schweißnähte sind.

6. Vorrichtung nach Anspruch 4 oder 5, dadurch gekennzeichnet, dass die Hülsen (2, 3) und die Ringe (4, 5, 7) aus rostfreiem Stahl sind.

7. Vorrichtung nach einem der vorhergehenden Ansprüche, dadurch gekennzeichnet, dass die Mittel zum Einspritzen Rohrleitungen (6, 6') sind, die zwischen der ersten (2) und der zweiten Hülse (3) münden und mit einer Druckfluidversorgung verbunden sind.

8. Vorrichtung nach einem der vorhergehenden Ansprüche, dadurch gekennzeichnet, dass das Druckfluid Wasser unter einem vorgesteuerten Druck von zwischen 1200 und 1600 bar ist.

9. Vorrichtung nach einem der vorhergehenden Ansprüche zur Befestigung an wenigstens einem Rohr (1, 1'), dadurch gekennzeichnet, dass
- die erste Hülse (2) einen Außendurchmesser hat, der kleiner ist als der Innendurchmesser des Rohrs (1, 1'),
- die zweite Hülse (3) einen Innendurchmesser im Wesentlichen gleich dem Außendurchmesser der ersten Hülse (2) hat,
- die Ringe (4, 5, 7) einen Innendurchmesser im Wesentlichen gleich dem Außendurchmesser der zweiten Hülse (3) haben.

10. Vorrichtung nach einem der Ansprüche 1 bis 8, zur Befestigung an wenigstens einem zylindrischen Element (8, 8'), dadurch gekennzeichnet, dass
- die erste Hülse (2) einen Innendurchmesser hat, der größer ist als der Außendurchmesser des zylindrischen Elements (8, 8'),
- die zweite Hülse (3) einen Außendurchmesser im Wesentlichen gleich dem Innendurchmesser der ersten Hülse (2) hat,
- die Ringe (4, 5, 7) einen Außendurchmesser im Wesentlichen gleich dem Innendurchmesser der zweiten Hülse (3) haben.

11. Verbindung von zwei stumpf stoßenden Rohren (1, 1'; 8, 8'), gebildet durch eine Vorrichtung nach einem der vorhergehenden Ansprüche.

12. Vorrichtung zum Reparieren eines beschädigten Abschnitts eines Rohres (1, 1'; 8, 8'), gebildet durch eine Vorrichtung nach einem der Ansprüche 1 bis 10.

13. Vorrichtung zum Verschließen eines Rohres (1, 1'), gebildet durch eine Vorrichtung nach einem der Ansprüche 1 bis 9, bei der die erste Hülse (2) eine Wand (8) zum Verschließen ihres Innenraums aufweist.

## Claims

1. Device adapted to be fixed and sealed to at least one cylindrical member (1, 1'), including:
- a first sleeve (2),
- a second sleeve (3) coaxial with the first sleeve (2) having a greater capacity for deformation than the first sleeve (2) and fixed and sealed to the first sleeve (2) at both ends,
- two cylindrical rings (4, 5) coaxial with the second sleeve (3), pressed against the latter, and
- at least means (6, 6') for injecting a pressurized fluid between the first sleeve (2) and the second sleeve (3), characterized in that each ring is fixed by one of its edges to one end of the second sleeve (3) and in that its other edge is free in order to allow deformation of the ring by expansion of the second sleeve, in order to seal the cylindrical member.

2. Device according to claim 1 characterized in that it includes at least one third ring (7) pressed onto the second sleeve (3) and disposed between the previous two rings (4, 5).

3. Device according to any one of the preceding claims characterized in that the rings (4, 5, 7) have bevelled free edges on the side adjacent the second sleeve (3).

4. Device according to any one of the preceding claims characterized in that the sleeves (2, 3) and the rings (4, 5, 7) are made of metal.

5. Device according to claim 4 characterized in that the fixing is performed by welding.

6. Device according to claim 4 or claim 5 characterized in that the sleeves (2, 3) and the rings (4, 5, 7) are made of stainless steel.

7. Device according to any one of the preceding claims characterized in that the injection means comprise pipes (6, 6') discharging between the first sleeve (2) and the second sleeve (3) and connected to a pressurized fluid supply.

8. Device according to any one of the preceding claims characterized in that the pressurized fluid is water at a controlled pressure between 1 200 bars and 1 600 bars.

9. Device according to any one of the preceding claims adapted to be fixed to at least one tube (1, 1'), characterized in that:
- the first sleeve (2) has an outside diameter less than the inside diameter of the tube (1, 1'),
- the second sleeve (3) has an inside diameter substantially equal to the outside diameter of the first sleeve (2), and
- the rings (4, 5, 7) have an inside diameter substantially equal to the outside diameter of the second sleeve (3).

10. Device according to any one of claims 1 to 8 adapted to be fixed to at least one cylindrical member (8, 8'), characterized in that:
- the first sleeve (2) has an inside diameter greater than the outside diameter of the cylindrical member (8, 8'),
- the second sleeve (3) has an outside diameter substantially equal to the inside diameter of the first sleeve (2), and
- the rings (4, 5, 7) have an outside diameter substantially equal to the inside diameter of the second sleeve (3).

11. Connector for joining two tubes (1, 1,', 8, 8') end-to-end consisting of a device according to any one of the preceding claims.

12. Device for repairing a damaged area of a tube (1, 1', 8, 8') consisting of a device as claimed in any one of claims 1 to 10.

13. Device for closing off a tube (1, 1') consisting of a device according to any one of claims 1 to 9 in which the first sleeve (2) includes a wall (8) for closing off its internal space.
